# EUROPÄISCHE PATENTSCHRIFT

(11) **EP 1 600 521 B1**
(45) Veröffentlichungstag und Bekanntmachung des Hinweises auf die Patenterteilung: **30.07.2008**
(21) Anmeldenummer: 05010845.5
(22) Anmeldetag: 19.05.2005
(51) Int. Cl.: C22F 1/00

(54) **Verfahren und Anlage zur Herstellung von presswarmen Bolzen aus Aluminium-Knetlegierungen**
Process and installation for producing wrought aluminium alloy billets
Procédé et installation de production de billettes en alliage d'aluminium de corroyage

(30) Priorität: 21.05.2004 DE 202004008241 U
(43) Veröffentlichungstag der Anmeldung: 30.11.2005
(73) Patentinhaber: Rackwitz Industrieanlagen GmbH, 04519 Rackwitz (DE)
(72) Erfinder: Rockstroh, Gerald, 04158 Leipzig (DE); Göppner , Bernd, 04519 Rackwitz (DE); Schmidt, Klaus - Dieter, 04249 Leipzig (DE)
(74) Vertreter: Tragsdorf, Bodo

(56) Entgegenhaltungen:
- DE-U- 20 309 427
- GB-A- 393 020
- US-A- 4 677 838
- US-A1- 2005 034 502

## Beschreibung

Die Erfindung bezieht sich auf ein Verfahren und eine Anlage zur Herstellung von presswarmen Bolzen aus Alumlnium-Knatlegierungen mit einem Durchmesser von 150 mm bis 500 mm, die als Ausgangsmaterial zum Strangpressen von Profilen eingesetzt werden.

Zum Strangpressen von Alumlniumprofilen werden auf die erforderliche Prosstemperatur vorerwärmte Pressbolzen eingesetzt. Diese werden in üblichen Handelslängen von ca. 6 bis 8 m In einem Schnellerwärmungsofen auf die entsprechende Presstemperatur erwärmt. In Abhängigkeit von der Dimensionierung der zu verpressenden Profile muss die Strangpressanlage mit Bolzen unterschiedlicher Längen versorgt werden. Aus der DE 203 09 427 U1 ist eine Anlage zum Behandeln von Stranggussstangen oder Stranggussbolzen bekannt. Ein auf Umformtemperatur in einem speziellen Ofen erwärmter Bolzen wird aus dem Ofen ausgefahren und durch Abscheren auf das erforderliche Längenmaß getrennt und sofort dem Strangpresswerkzeug zugeführt. Der Restbolzen wird nach dem Abschervorgang durch eine Reststück-Steuerung wieder in den Ofen zurückgefahren. Dieser Vorgang wiederholt sich vor jedem Pressvorgang. Die Umformtemperatur für das Strangpressen liegt in einem Bereich von 480 bis 520 °C.
Ein Abscheren der Bolzen bei diesen Temperaturen führt zu einer starken Deformation im Bereich der Abscherstelle. Während des nachfolgenden Strangpressvorganges besteht aufgrund der deformierten Schnittfläche die Gefahr der Bildung von Lufteinschlüssen Im Profil. Profile mit Lufteinschlüssen sind für einen weiteren Einsatz als mechanisch hochbeansprurhbare Bauteile, wie z.B. im Fahrzeugbau, ungeeignet, und als Ausschuss zu behandeln.

Der Erfindung liegt die Aufgabe zugrunde, ein Verfahren und eine Anlage zur Herstellung von presswarmen Bolzen aus Aluminium-Knetlegierungen mit einem Durchmesser von 150 mm bis 500 mm zu schaffen, mit der vorerwärmte Pressbolzen definierter Längen in besonders wirtschaftlicher Weise hergestellt werden können, die zu mechanisch hoch beanspruchbaren Strangpressprofilen verarbeitbar sind.
Erfindungsgemäß wird die Aufgabe durch die In den Ansprüchen 1 und 12 angegebenen Merkmale gelöst.

Vorteilhafte Ausgestaltungen und Weiterbildungen der Anlage sind Gegenstand der Ansprüche 2 bis 11. Die Ansprüche 13 bis 16 beziehen sich auf Weiterbildungen der Verfahrensweise.
Die zur Durchführung des Verfahrens bestimmte Anlage besteht aus einem handelsüblichen, vorzugsweise gasbeheizten Ofen, einer speziellen Sägeeinrichtung zum Trennen der presswarmen Bolzen, einer Einrichtung zur Ermittlung der Länge der anfallenden Reststücke, einer verfahrbaren Baugruppe Sägeanschlag mit integriertem Reststückmanipulator sowie einem Lader und der Strangpresse zur Umformung der Pressbolzen in die gewünschten Aluminiumprofile. Die vollautomatisch arbeitende Anlage ist mit einer zentralen computergestützten Steuereinheit ausgerüstet, in die über entsprechende Schnittstellen alle zur Anlage gehörenden Aggregate eingebunden sind.
Die spezielle Sägeeinrichtung ermöglicht das Trennen der von auf 300 bis 550 °C erwärmten Pressbolzen mit einem Durchmesser von 150 mm bis 500 mm aus einer Aluminium-Knetiegierung durch Sägen, wobei eine hohe Winkligkeit der Schnittflächen erreicht wird, mit einer Genauigkeit von +/- 0,1 %, bezogen auf den jeweiligen Durchmesser des Pressbolzens oder der Stange. Die Pressbolzen bestehen aus Aluminium-Knetlegierungen. Die Knetlegierungen bestehen aus dem Grundwerkstoff Aluminium mit bis zu 5 Gew.-% Mangan, Silizium, Zink, Magnesium und Kupfer. Prossbolzen in den vorgenannten Durchmesserbereichen besitzen im Temperaturbereich von 300 bis 550 °C aufgrund der werkstoffbedingten Fließeigenschaften einen sehr welchen Zustand. Bisher ist es weder aus der Literatur noch aus der Praxis bekannt, dass solche presswarmen Bolzen durch einen Sägeschnitt getrennt werden können. Beim Sägen mittels Sägeblätter oder Sägebänder erfolgt durch die umlaufende Bewegung der Zähne eine Spanbildung. Aufgrund des weichen Zustandes der Aluminium-Knetlegierung der Pressbolzen bedingt durch die hohen Temperaturen, muss mit einem Verschmelzen bzw. Zusammenbacken der Späne in der Schnittfuge gerechnet werden und einem "Festfressen" der Säge. Die einzig mögliche Trennung der presswarmen Bolzen bestand somit in dem Abscheren der Bolzen.
Durch eine gezielte Abstimmung der Vorschubgeschwindigkeit und der Schnittgeschwindigkeit in Abhängigkeit vom Bolzendurchmesser und der Bolzentemperatur, bei einer Vorschubgeschwindigkeit von 10 bis 30 mm/s und einer Schnittgeschwindigkeit des Sägblattes von 50 bis 70 m/s, ist es vollkommen unerwartet und überraschend gelungen, unter Verwendung eines Hartmetallsägeblattes oder -bandes mit vor- und nachschneidenden Sägezähnen presswarme Bolzen zu trennen. Vorzugsweise wird das Sägeblatt oder Sägeband luftgekühlt.
Während des Trennschnittes werden kurz brechende Späne gebildet. Die vor- und nachschneidenden Sägezähne trennen das warme Pressbolzenmaterial mittig, links und rechts, wobei die gebildeten Späne zur Mitte des Sägeschnittes geführt werden. Dadurch wird ein Berühren der Späne mit der heißen Schnittfläche und somit ein Verkleben oder Aufschweißen verhindert.

Bei den während des Trennprozesses herrschenden hohen Temperaturen besteht eine große Gefahr, dass die Späne noch Innerhalb der Trennfuge zusammenbacken und ein Sägeschnitt nahezu unmöglich wird, verbunden mit einem hohen Verschleiß der Sägezähne.

Die Säge ist unmittelbar hinter dem Ausgang des Anwärmofens, zwischen dem Ofen und dem Pressenlader der Strangpresse, angeordnet. Die Säge ist in Kompakter Bauweise sehr kurzbauend ausgeführt, damit zwischen Ofenausgang und dem Pressenlader nur ein möglichst kleiner Einbauraum beansprucht wird und es zu keiner größeren Abkühlung der presswarmen Bolzen kommt. Das Sägeblatt Ist vollständig eingehaust und das Gehäuse wird während des Sägeschnittes ständig be- und entlüftet. Zusätzlich besitzt das Sägeblatt mehrere Öffnungen, damit aufgrund der thermischen Einflüsse kein Wärmestau entsteht, der zu Verwerfungen des Sägeblattes führen könnte. Die Anzahl der Sägezähne ist abhängig vom Durchmesser der zu trennenden Preasbolzen. Bei Pressbolzen mit einem Durchmesser im Bereich von 150 bis 500 mm wird ein Sägeblatt mit bis zu 60 Sägezähnen eingesetzt. Bei Bolzen mit einem Durchmesser von größer als 300 mm kann alternativ auch eine Bandsäge eingesetzt werden.

Die Sägezahngeometrie der Sägezähne des Bandes der Bandsäge ist mit denen des Sägeblattes identisch. Die Sägezähne sind in wechseinder Reihenfolge als Vorschneide- und Nachschneidezähne ausgebildet. Es werden Späne mit einem kleinen Rolldurchmesser von ca. 20 mm bis 40 mm gebildet, die während des Sägens der presswarmen Bolzen unter den extrem hohen thermischen Belastungen zur Mitte des Sägeschnittes geführt werden und aus den Zahnlücken fallen und nicht zusammenbacken können. Letzteres wird insbesondere durch eine Kühlung mit einem gasförmigen Medium, wie Stickstoff oder gekühlter Luft unterstützt, die mit einer Strömungsgeschwindigkeit von 20 bis 70 m/s zugeführt wird. Die Schmierung der Sägezähne erfolgt mit einem rückstandsfrei verdampfenden Mineralöl.

Unmittelbar nach Beendigung des Sägevorganges werden die in vorgegebener Länge getrennten Bolzen dem Pressenlader übergeben und dem Presswerkzeug bzw. der Matrize der Strangpresse zugeführt. Die Längen der verbleibenden Reststücke werden mittels einer elektronischen Messeinrichtung erfasst und in Abhängigkeit von der ermittelten Reststücklänge entweder wieder In den Ofen zurückgeführt oder mittels eines innerhalb der Sägeeinrichtung angeordneten Schweißaggregates, welches synchron zum Sägezyklus arbeitet, mit dem nachfolgenden Bolzen verschweißt. Kleine, nicht mehr verwertbare Reststücke werden in einen Schrottbehälter abgelegt.

Hinsichtlich näherer Einzelheiten zu den Baugruppen Reststücklängenermittlung und Sägeanschlag mit integriertem Reststückmanipulator wird auf das nachfolgende Ausführungsbeispiel verwiesen.
Die Sägeeinrichtung ist von einem Gehäuse umgeben und besteht aus einem Maschinenständer mit einer Aufnahme für den Antrieb für das Sägeblatt oder Sägeband. Sägeblatt oder Sägeband sind auf einem Schlitten montiert, der separat angetrieben und mit der eingestellten Vorschubgeschwindigkeit verfahren wird. Bei Einsatz eines Sägeblattes liegen die Achsen von Sägblatt und Werkstück in einer Ebene.
Die vorgeschlagene Anlage ermöglicht eine besonders wirtschaftliche Herstellung von presswarmen Pressbolzen mit einem geringen Anfall an Schrott. Die entsprechend dem jeweiligen Bedarf der Strangpresse abgesägten Bolzen besitzen eine hohe Winkligkeit hinsichtlich des Sägeschnittes, sodass beim nachfolgenden Strangpressen Lufteinschlüsse vermieden werden und mechanisch hochbeanspruchte Profile hergestellt werden können. Da der Sägevorgang bei Werkstück-Temperaturen erfolgt, die in etwa der nachfolgenden Presstemperatur entsprechen, und der Trennvorgang gezielt in Abhängigkeit vom Pressbolzenbedarf der Strangpressanlage erfolgt, wird eine optimale Auslastung der Strangpresse erreicht.

Die Erfindung soll nachstehend an einem Beispiel erläutert werden. In der zugehörigen Zeichnung zeigen
- Fig. 1: eine erfindungsgemäße Anlage In vereinfachter schematischer Darstellung und
- Fig. 2: die Sägeeinrichtung als Längsschnitt.

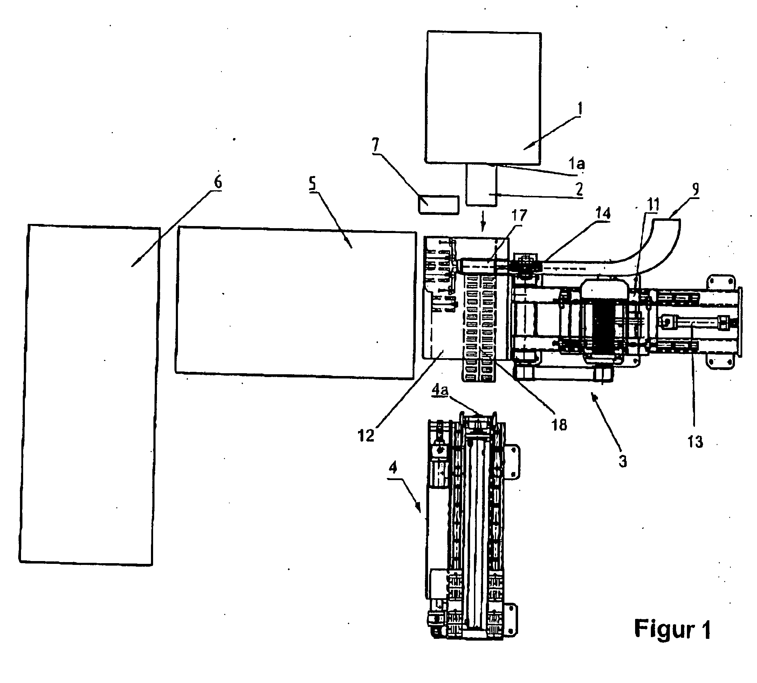

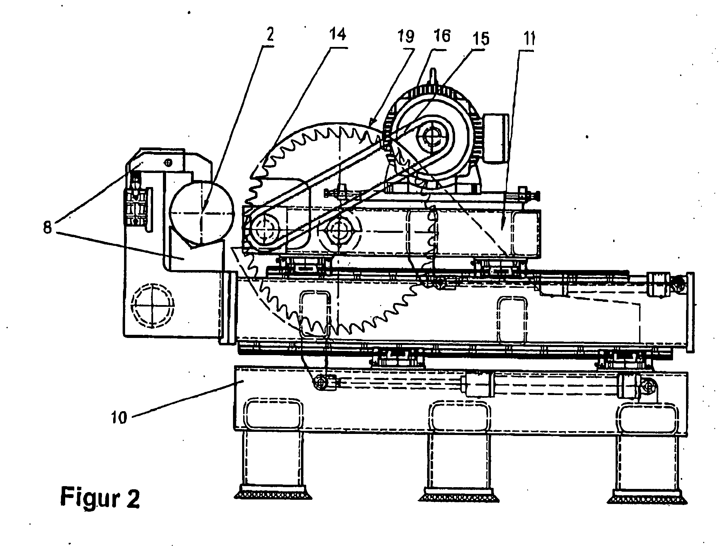

Die in Figur 1 gezeigte Anlage besteht aus einem vorzugsweise gasbeheizten Ofen 1 in dem die zum Strangpressen bestimmten Pressbolzen 2 auf die erforderliche Umformtemperatur von 300 bis 550 °C erwärmt werden. Mittels des zum Ofen 1 zugehörigen Transportsystems, das als Rollen- oder Kettenförderer ausgebildet ist, werden die einzelnen Pressbolzen 2 in der durch einen "Pfeil" gekennzeichneten Transportrichtung in die Sägeeinrichtung 3 transportiert, bis die vordere Stirnfläche des Pressbolzens 2 In Kontakt mit der Anschlagfläche 4a des mechanischen Sägeanschlags 4 gelangt. Der Sägeanschlag 4 ist als separate Baueinheit ausgeführt, wobei der Anschlag mit der Anschlagfläche 4a auf Gleitführungen verfahrbar ist. Ausgehend von der Länge des herzustellenden Strangprossprofils (Ausziehlänge) wird über ein rechnergestütztes Programm die erforderliche Prossbolzenlänge ermittelt und das Anschlagmittel 4a in die erforderliche Position für die gewünschte Pressbolzenlänge verfahren. Anschließend wird der in Sägentellung befindliche Pressbolzen 2 mittels hydraulisch betätigbarer Spannzangen 8 zu beiden Seiten des Sägeschnittverlaufes festgeklemmt. Die beiden Spannzangen 8, von denen In Fig. 2 nur eine zu sehen ist, sind horizontal verfahr- bzw. schwenkbar angeordnet, um nach Beendigung des Sägeschnittes den Weitertransport des Pressbolzen nicht zu behindern.
Nach dem Festklemmen des zu sägenden Pressbolzens 2 wird die Baugruppe Sägeanschlag 4 von der Stirnfläche des Pressbolzens 2 wegbewegt, um ein Verklemmen nach dem Sägen zu verhindern. Die Sägeeinrichtung 3, die Insbesondere in Fig. 2 gezeigt ist, Ist als Obertischkreissäge ausgebildet und in unmittelbarer Nähe zum Ofenausgang 1a angeordnet. In einem Portalträgerrahmen 10 ist der Sägetisch 12 mit dem verfahrbaren Schlitten 11 integriert. Der Vorschub des Schlittens 11 erfolgt durch einen Hydraulikzylinder 13 und ist stufenlos regelbar, in einem Bereich von 10 bis 30 mm/s. Das Sägeblatt 14 ist auf einer Welle montiert und wird über ein Zahnriemenantrieb 15 mittels eines Drehstrommotors 16 angetrieben, mit einer Schnittgeschwindigkeit von 50 bis 70 m/s. Das Sägeblatt 14 Ist mittels eines Gehäuses 19 eingehaust. Zum Sägen von presswarmen Pressbolzen mit einem Durchmesser Im Bereich von 150 bis 400 mm wird ein Sägeblatt mit bis zu 60 Sägezähnen eingesetzt, wobei der Sägeblattdurchmesser ca. 600 bis 800 mm beträgt. Die Sägezähne sind in wechselnder Reihenfolge als Vorschneide- und Nachschneldezähne ausgebildet und trennen das Material wechselseitig mittig, links und rechts. Der Span wird zur Mitte des Sägeschnlttes geführt. Dadurch wird eine Berührung des Spanes mit der heißen Schnittfläche verhindert. Dieser kann daher nicht mit dem heißen Bolzenmaterlal verkleben oder verschweißen. Die Sägezähne sind so ausgebildet, dass Späne mit einem kleinen Rolldurchmesser gebildet werden. Diese können während des Sägeschnittes aus den Zahnlücken fallen. Unter den hohen thermischen Bedingungen bei Sägetemperaturen von beispielsweise 400°C ist es erforderlich, zu gewährleisten, dass die Späne nicht zusammenbacken oder mit der Schnittfläche verkleben bzw. aufschweißen. In Kombination mit der gezielten Bildung von Spänen mit einem kleinen Rolldurchmesser wird dies durch eine intensive Kühlung mit einem gasförmigen Medium, wie Stickstoff oder gekühlter Luft, unterstützt. Das Kühlmedium wird durch den Zufuhrkanal über ein Düsensystem mit einer Strömungsgeschwindigkeit von 20 bis 70 m/s in den Bereich der Spanbildung geleitet. Der Zufuhrkanal ist In dem Sägeblattgehäuse 19 Integriert. Die kontinuierliche Schmierung der Sägezähne während des Sägeschnittes erfolgt mit einem rückstandsfrei verdampfenden Mineralöl, über die Schmiermittelzuführung 17,
Die während des Sägeschnittes gebildeten Späne werden durch den Abfuhrkanal 9 abgesaugt.
Nach Beendigung des Sägeschnittes werden die Kühl- und Schmiermittelzuführung selbsttätig abgeschaltet und der Schlitten 11 fahrt wieder in seine Ausgangsstellung zurück. Anschließend wird die an dem in definierter Länge abgesägten Pressbolzenstück angreifende Klemmzange 8 gelöst und das Pressbolzenstück wird über einen Querförderer 18 in den Pressenlader 5 abgelegt und der Strangpresse 6 zugeführt. Alternativ kann auch vor dem Pressenlader noch eine Induktionserwärmungseinrichtung angeordnet sein, in die das Pressbolzenstück eingeschoben wird, um erforderlichenfalls noch auf die gewünschte Presstemperatur erwärmt zu werden.
Das durch den Sägeschnitt anfallende Restbolzenstück, das noch von der in Ofenrichtung zeigenden Klemm- bzw. Spannzange gehalten wird, wird durch eine Schwenkbewegung der Klemmvorrichtung aus dem Sägeblattbereich entfernt und auf einer Rutsche abgelegt und entsorgt.
Seitlich neben dem Ofenausgang 1a, unmittelbar vor der Sägeeinrichtung 3 Ist eine Einrichtung 7 zur Ermittlung der Länge des nach dem Sägeschnitt anfallenden Reststückes angeordnet. Der abzusägende Pressbolzen wurde bis zum Sägeanschlag transportiert und der nachfolgende Pressbolzen wird in Richtung zur Sägeeinrichtung transportiert, wobei zwischen dem Ende des ersten Bolzens und dem Anfang des nachfolgenden Pressbolzens eine Kleine Lücke bzw. Spalt eingehalten wird, die als Messstelle für eine optische Längenmesseinrichtung dient. Diese liefert die entsprechenden Signale an eine computergestützte Rechnereinheit, die ausgehend von der ermittelten Gesamtlänge des zu sägenden Pressbolzens und der gewünschten Pressbolzenlänge die Länge des aktuellen Reststückes ermittelt.
In Abhängigkeit von der ermittelten Restatücklänge wird dann ein entsprechendes Signal ausgelöst, ob das Reststück als Abfall zu entsorgen ist, oder zur weiteren Verwendung wieder zurück In den Ofen transportiert werden soll. Zum Rücktransport in den Ofen 1 wird der Sägeanschlag 4 wieder in eine betriebsbereite Stellung bewegt und mittels des verfahrbaren Anschlagmittels 4a wird das Reststück nach der Freigabe durch die Klemmzange 8 in den Ofen geschoben. Die Baugruppe Sägeanschlag 4 übernimmt somit auch die Funktion eines Reststückmanipulators.
Zusätzlich ist noch ein sogenanntes "Schopfprogramm" vorgesehen, falls es erforderlich ist, das Kopf- und/oder Fußende des Pressbolzens abzutrennen.
Die computergesteuerte, vollautomatisch arbeitende Sägeeinrichtung ist in einer Kabine elngehaust.
Mit der vorbeschriebenen Sägeeinrichtung können unter den angegebenen Verfahrensparametern presswarme Bolzen mit einem Durchmesser von ca. 150 bis 500 mm bis zu Längen von 2000 mm getrennt werden. Die gebildeten Schnittflächen sind glatt und weisen ein sehr hohe Winkligkeit von +/- 0,1%, bezogen auf den Durchmesser der Pressbolzen auf. Die hohe Qualität der Schnittflächen zeigt sich auch dadurch, dass nach einer mehrwöchigen Zwischenlagerung abgesägter Pressbolzen an den Schnittflächen keine Oxidbildung aufgetreten ist.

## Patentansprüche

1. Anlage zur Herstellung von presswarmen Bolzen aus Aluminium-Knetlegiemngen, für das unmittelbar nachfolgende Strangpressen von Profilen, bestehend aus einem Ofen (1) zum Erwärmen der Pressbolzen (2) mit einem Durchmesser von 150 mm bis 500 mm auf Umformtemperatur, einer in unmittelbarer Nähe zum Ofenausgang (1a) angeordneten Sägeeinrichtung (3) zum Trennen der auf eine Temperatur von 300 bis 550 °C erwärmten Pressbolzen In definierte Längen und einem Lader (5) zum Weitertransport der abgelängten Pressbolzen zur Strangpresse (6) sowie einer Einrichtung (7) zur Ermittlung der Länge der anfallenden Reststücke und einer verfahrbaren Baugruppe Sägeanschlag (4) mit integriertem Reststückmanipulator (4a).

2. Anlage nach Anspruch 1, **dadurch gekennzeichnet, dass** die Anschlagfläche (4a) des Sägeanschlags (4) selbsttätig auf die jeweilige Pressbolzenschnlttlänge einstellbar ist, wobei die aktuelle Pressboizenschnittiänge in Abhängigkeit von der Länge des herzustellenden Strangpressprofils mittels einer programmierbaren Rechnereinheit ermittelbar ist und durch ein Signal die Bewegung des Anschlagmittels (4a) in die betriebsbereite Stellung auslösbar ist.

3. Anlage nach einem der Ansprüche 1 oder 2, **dadurch gekennzeichnet, dass** zur Ermittlung der Reststücklänge als Messstellen die Anschlagfläche (4a) des Sägeanschlages (4) und ein zwischen zwei hintereinander angeordneten Pressbolzen (2) befindlicher Luftspalt dienen, um die Gesamtlänge zu ermitteln, und durch eine Signalübertragung an eine Rechner- und Steuereinheit, ausgehend von der Gesamtlänge des zu sägenden Pressbolzens und der ermittelten Pressbolzenschnittlänge die aktuelle Reststücklänge ermittelbar Ist und in Abhängigkeit von dieser ein Steuersignal auslösbar ist, um das Reststück entweder als Abfall zu entsorgen oder in den Ofen (1) zurück zu transportieren.

4. Anlage nach einem der Ansprüche 1 bis 3, **dadurch gekennzeichnet, dass** zum Rücktransport eines Reststückes In den Ofen (1) der Sägeanschlag (4) In eine betriebsbereite Stellung bewegbar Ist und über die Steuereinheit ein Signal erhält, um durch eine Bewegung des Anschlagmittels (4a) das Reststück in den Ofen zu schieben.

5. Anlage nach einem der Ansprüche 1 bis 4, **dadurch gekennzeichnet, dass** die Sägeeinrichtung (3) als eine selbständige, unmittelbar zwischen Ofen (1) und Presswerkzeug (6) Integrierbare Baueinheit ausgebildet ist.

6. Anlage nach einem der Ansprüche 1 bis 5, **dadurch gekennzeichnet, dass** die Sägeeinrichtung (3) als Kreis- oder Bandsäge ausgebildet und durch ein Gehäuse umschlossen ist, und Sägblatt (14) oder Sägeband eingehaust sind.

7. Anlage nach einem der Ansprüche 1 bis 6, **dadurch gekennzeichnet, dass** in dem Gehäuse (19) für das Sägeband (14) ein Kanal für die Zu- und Abführung eines gasförmigen Kühlmediums Integriert Ist.

8. Anlage nach einem der Ansprüche 1 bis 7, **dadurch gekennzeichnet, dass** an dem Gehäuse (19), im Bereich der Sägezähne (14) eine Zuführung (17) für ein Schmiermittel auf Mineralölbasis angeordnet Ist.

9. Anlage nach einem der Ansprüche 1 bis 8, **dadurch gekennzeichnet, dass** die Sägeeinrichtung (3) mindestens zwei, In mehrere Richtungen bewegbare Spann- und Klemmvorrichtungen (8) zur Fixierung des Pressbolzens (2) umfasst.

10. Anlage nach einem der Anspruchs 1 bis 9, **dadurch gekennzeichnet, dass** die Sägeeinrichtung (3) mit einem mit einer Vorschubgeschwindigkeit, In Abhängigkeit von der Temperatur der Pressbolzen (2), von 10 bis 30 mm/s, verfahrbaren Schlitten (11) und mit einem Sägeblatt (14) oder Sägeband ausgerüstet ist, das mit einer Schnittgeschwindigkeit von 50 bis 70 m/s antreibbar ist.

11. Anlage nach einem der Ansprüche 1 bis 10, **dadurch gekennzeichnet, dass** das Sägeband oder Sägeblatt (14) mit Vorschneide- und Nachschneidezähnen ausgebildet ist, zur Bildung von Spänen mit einem Rolldurchmesser von kleiner als 20 mm, die zur Mitte des Sägeschnittes gelangen.

12. Verfahren zur Herstellung von presswarmen Bolzen aus Aluminium-Knetlegierungen in der Anlage nach einem der Ansprüche 1 bis 11 für ein unmittelbar nachfolgendes Strangpressen von Profilen, durch folgende Verfahrensschritte:
a) Erwärmen der Pressbolzen (2) mit einem Durchmesser von 150 mm bis 500 mm auf eine Umformtemperatur von 300 bis 550 °C In einem Ofen (1),
b) Zuführung eines einzelnen Pressbolzens (2) in eine dem Ofen unmittelbar nachgeschaltete Sägeeinrichtung (3) mit Anschlag (4, 4a), Spannvorrichtung (8) und verfahrbarem Sägeschlitten (11), in der der auf eine Temperatur von 300 bis 550 °C erwärmte Pressbolzen (2) in vorgegebene, definierte Längen getrennt wird, und
c) der abgelängte Pressbolzen (2) ohne Zwischenlagerung zur Strangpresse (6) transportiert wird.

13. Verfahren nach Anspruch 12, **dadurch gekennzeichnet, dass** der Sägeschlitten (11), in Abhängigkeit von der Temperatur der presswarmen Bolzen (2), mit einer Vorar.hubgeschwindlgkeit von 10 bis 30 mm/s bewegt wird und die Schnittgeschwlndlgkeit 50 bis 70 m/s beträgt.

14. Verfahren nach einem der Ansprüche 12 oder 13, **dadurch gekennzeichnet, dass** während des Sägeschnittes das heiße Pressbolzenmaterial mittels vor- und nachschneidender Sägezähne wechselseitig mittig, links und rechts getrennt wird, wobei die gebildeten Späne zur Mitte des Sägeschnittes geführt werden und eine Berührung der Späne mit der heißen Schnittfläche verhindert, und erforderlichenfalls ein gasförmiges Kühlmedium und/oder Schmiermittel auf Mineralölbasis zugeführt wird.

15. Verfahren nach einem der Ansprüche 12 bis 14, **dadurch gekennzeichnet, dass** mittels einer programmierbaren Rechnereinheit, in Abhängigkeit von der Länge des herzustellenden Strangpressprofils, die aktuelle Pressbolzenschntttlänge ermittelt und diese In ein elektrisches Signal umgewandelt wird, durch das das Anschlagmittel (4a) in die betriebsbereite Stellung für die definierte Schnittlänge bewegt wird.

16. Verfahren nach einem der Ansprüche 12 bis 15, **dadurch gekennzeichnet, dass** die Länge des verbleibenden Reststückes des Pressbolzens (2) ermittelt wird, wobei als Messstellen die Anschlagfläche (4a) des Sägeanschlages (4) und ein zwischen zwei hintereinander angeordneten Pressbolzen (2) befindlicher Luftspalt dienen, um die Gesamtlänge zu ermitteln, und durch eine Signalübertragung an eine Rechner- und Steuereinheit, ausgehend von der Gesamtlänge des zu sägenden Pressbolzens (2) und der ermittelten Presabolzenschnittlänge die aktuelle Reststücklänge ermittelt wird und in Abhängigkeit von dieser ein Steuersignal auslöst wird, um das Reststück entweder als Abfall zu entsorgen oder in den Ofen (1) zurück zu transportieren.

## Claims

1. Installation for producing wrought aluminium alloy billets to be used in the immediate downstream production of extruded sections, consisting of an oven (1) for heating up to forming temperature the blanks (2) with diameters ranging from 150 mm to 500 mm, a sawing device (3) placed in the immediate vicinity of the oven outlet (1a) to cut to size the blanks heated up to temperatures between 300 °C and 500 °C, and a loader unit (5) for conveying the blanks cut into lengths to the extruding machine (6), as well as a device (7) for measuring the butt lengths and an adjustable component consisting of a saw bench (4) with integrated butt manipulator (4a).

2. Installation according to claim 1, **characterized in that** the saw bench's (4) stopping face (4a) automatically adjusts to the blank length required with the actual blank length being computed by an programmable processor unit as a function of the required length of the extrusion section to be produced, and the limit stop's (4a) motion into the position ready for operation is triggered by an appropriate signal.

3. Installation according to one of the claims 1 or 2, **characterized in that** the saw bench's (4) stopping face (4a) and the air gap between two blanks (2) following one immediately after the other serve as measuring points to calculate the overall length after which, considering the overall length available for cutting the blank and the actual length of the blank to be cut, a signal is transmitted to a processor and controller unit that calculates the butt length and, based on such length, a controller signal is triggered to either discard the butt as off-spec or send it back to the oven (1).

4. Installation according to one of the claims 1 to 3, **characterized in that**, in order to send back the butt to the oven (1), the saw bench (4) can be moved into a position ready for operation after which it receives a signal from the controller unit by which the limit stop (4a) is caused to moved so as to push the butt into the oven.

5. Installation according to one of the claims 1 to 4, **characterized in that** the sawing device (3) is provided as a self-contained modular unit that can be integrated immediately between the oven (1) and the extruding machine (6).

6. Installation according to one of the claims 1 to 5, **characterized in that** the sawing device (3) can be either an encased circular saw or ribbon saw, with the saw blade (14) or ribbon being also enclosed in such casing.

7. Installation according to one of the claims 1 to 6, **characterized in that** a conduit is integrated in the casing (19) that encloses the saw ribbon (14) to allow a gaseous cooling agent to be introduced and/or discharged.

8. Installation according to one of the claims 1 to 7, **characterized in that** a feeding attachment (17) is provided on the casing (19) to allow a mineral oil based lubricant to be introduced to the space where the saw teeth (14) are located.

9. Installation according to one of the claims 1 to 8, **characterized in that** the sawing device (3) has at least two clamping/chucking fixtures (8) that can be moved in several directions to hold the blank (2) in place.

10. Installation according to one of the claims 1 to 9, **characterized in that** the sawing device (3) is equipped with a carriage (11) that can be moved with a rate of feed from 10 mm/sec to 30 mm/sec as a function of the blank's (2) temperature, and a saw blade (14) or ribbon the cutting drive of which can be adjusted from 50 m/sec to 70 m/sec.

11. Installation according to one of the claims 1 to 10 **characterized in that** the saw ribbon or saw blade (14) have roughing teeth and trimming teeth to produce chips the diameter of which is smaller than 20mm and, therefore, are collecting in the middle of the saw cut.

12. Process for producing wrought aluminium alloy billets by means of an installation according to one of the claims 1 to 11, with such blanks being used in the immediate downstream production of extruded sections, by the following process steps:
a) heating up the blanks (2) with diameters ranging from 150 mm to 500 mm in an oven (1) to a forming temperature between 300 °C and 550 °C;
b) feeding each single blank (2) into a sawing device (3), that is placed immediately downstream to the oven and is equipped with a limit stop (4, 4a), a clamping fixture (8) and a moveable saw carriage (11), in which the said blank (2) at a temperature between 300 °C and 550 °C is cut into predefined lengths; and
c) conveying the blank (2) cut to size to the extrusion machine (6) without the need of an intermediate storage.

13. Process according to claim 12, **characterized in that** the saw carriage (11) is moved with a rate of feed from 10 mm/sec to 30 mm/sec as a function of the blank's (2) temperature, and the cutting speed is adjusted from 50 m/sec to 70 m/sec.

14. Process according to one of the claims 12 or 13, **characterized in that** hot blank material, when being cut, is removed by roughing teeth and trimming teeth alternately from the middle, the left und the right side, whereby the chips produced in this way are directed to the middle of the saw cut and, hence, are prevented from coming into contact with the hot cut edges, and a gaseous cooling agent and/or mineral oil based lubricant is introduced if required.

15. Process according to one of the claims 12 to 14, **characterized in that** the actual blank length is computed by an programmable processor unit as a function of the required length of the extrusion section to be produced, and such data is then converted into an electric signal by which the limit stop (4a) is triggered to move into the position ready for operation.

16. Process according to one of the claims 12 to 15, **characterized in that** the blank's (2) butt length is determined, whereat the saw bench's (4) stopping face (4a) and the air gap between two blanks (2) following one immediately after the other serve as measuring points to calculate the overall length after which, considering the overall length available for cutting the blank (2) and the actual length of the blank to be cut, a signal is transmitted to a processor and controller unit that calculates the butt length and, based on such length, a controller signal is triggered to either discard the butt as off-spec or send it back to the oven (1).

## Revendications

1. Installation pour la production de billettes en alliages d'aluminium de corroyage destinées au filage directement consécutif de profilés, composée d'un four (1) destiné à porter les billettes (2) d'un diamètre compris entre 150 mm et 500 mm à une température de formage, d'un dispositif de sciage (3) disposé à proximité immédiate de la sortie du four (1a) et destiné à couper les billettes portées à une température comprise entre 300 et 550°C à des longueurs définies et d'une chargeuse (5) destinée à transporter les billettes mises à longueur vers la presse à filer (6) ainsi que d'un dispositif (7) destiné à calculer la longueur des pièces résiduelles produites et d'un bloc de butée de profondeur (4) roulant à manipulateur de pièces résiduelles (4a) intégré.

2. Installation selon la revendication 1, **caractérisée en ce que** la surface de butée (4a) de la butée de profondeur (4) peut se régler automatiquement sur la longueur de coupe de chaque billette, la longueur de coupe actuelle des billettes pouvant être calculée en fonction de la longueur du profilé à produire à la presse à filer au moyen d'une unité de calcul programmable et le déplacement du moyen de butée (4a) en position de service pouvant être déclenché par un signal.

3. Installation selon l'une quelconque des revendications 1 ou 2, **caractérisée en ce que**, pour calculer la longueur des pièces résiduelles, la surface de butée (4a) de la butée de profondeur (4) et un jeu situé entre deux billettes (2) disposées l'une derrière l'autre servent de points de mesure afin de calculer la longueur totale, et la longueur actuelle des pièces résiduelles peut se calculer par transmission d'un signal à une unité de calcul et de commande à partir de la longueur totale de la billette à scier et de la longueur de coupe calculée de la billette et, un signal de commande peut être déclenché en fonction de celle-ci afin d'éliminer la pièce résiduelle sous forme de déchet ou de la rapporter dans le four (1).

4. Installation selon l'une quelconque des revendications 1 à 3, **caractérisée en ce que**, pour rapporter une pièce résiduelle dans le four (1), la butée de profondeur (4) peut être déplacée en position de service et reçoit un signal par l'intermédiaire de l'unité de commande afin de mettre la pièce résiduelle dans le four en un seul déplacement du moyen de butée (4a).

5. Installation selon l'une quelconque des revendications 1 à 4, **caractérisée en ce que** le dispositif de sciage (3) est configuré sous forme de bloc autonome, pouvant être intégré directement entre le four (1) et l'outil de presse (6).

6. Installation selon l'une quelconque des revendications 1 à 5, **caractérisée en ce que** le dispositif de sciage (3) est configuré sous forme de scie circulaire ou de scie à ruban et est entouré d'un carter abritant la lame de scie (14) ou le ruban de scie.

7. Installation selon l'une quelconque des revendications 1 à 6, **caractérisée en ce qu'**un canal d'amenée et d'évacuation pour réfrigérant gazeux est intégré dans le carter (19) destiné au ruban de scie (14).

8. Installation selon l'une quelconque des revendications 1 à 7, **caractérisée en ce qu'**une amenée (17) pour lubrifiant à base d'huile minérale est disposée sur le carter (19), dans la zone des dents de scie (14).

9. Installation selon l'une quelconque des revendications 1 à 8, **caractérisée en ce que** le dispositif de sciage (3) comprend au moins deux dispositifs de serrage et de tension (8) pouvant se déplacer dans plusieurs sens et destinés à fixer la billette (2).

10. Installation selon l'une quelconque des revendications 1 à 9, **caractérisée en ce que** le dispositif de sciage (3) est équipé d'un chariot (11) pouvant avancer à une vitesse comprise, en fonction de la température des billettes (2), entre 10 et 30 mm/s et d'une lame de scie (14) ou ruban de scie qui peut être actionnée à une vitesse de coupe comprise entre 50 et 70 m/s.

11. Installation selon l'une quelconque des revendications 1 à 10, **caractérisée en ce que** le ruban de scie ou la lame de scie (14) est munie de dents dégrossisseuses et de dents d'arasage destinées à former des copeaux d'un diamètre de rouleau inférieur à 20 mm tombant au centre de la coupe.

12. Procédé pour la production de billettes en alliages d'aluminium de corroyage dans l'installation selon l'une quelconque des revendications 1 à 11 destinées au filage directement successif de profilés, **caractérisé par** les étapes de procédé suivantes:
a) Mise des billettes (2) d'un diamètre compris entre 150 mm et 500 mm à une température de formage comprise entre 300 et 550 °C dans un four (1),
b) Amenée de chaque billette (2) dans un dispositif de sciage (3) placé directement à la suite du four et muni d'une butée (4, 4a), d'un dispositif de serrage (8) et d'un chariot de sciage roulant (11) dans lequel la billette (2) portée à une température comprise entre 300 et 550°C est coupée à des longueurs précises, prédéfinies, et
c) la billette coupée à la bonne longueur (2) est transportée sans stockage intermédiaire vers la presse à filer (6).

13. Procédé selon la revendication 12, **caractérisé en ce que** le chariot de sciage (11) avance, en fonction de la température des billettes (2), à une vitesse comprise entre 10 et 30 mm/s, et la vitesse de coupe est comprise entre 50 et 70 m/s.

14. Procédé selon l'une quelconque des revendications 12 ou 13, **caractérisé en ce que**, pendant le sciage, le matériau très chaud constituant les billettes est coupé par des dents dégrossisseuses et des dents d'arasage en alternance au centre, à gauche et à droite, les copeaux formés étant guidés au centre de la coupe en évitant un contact des copeaux avec la surface de coupe très chaude, et le cas échéant en amenant un réfrigérant gazeux et/ou lubrifiant à base d'huile minérale.

15. Procédé selon l'une quelconque des revendications 12 à 14, **caractérisé en ce que** la longueur de coupe actuelle des billettes est calculée au moyen d'une unité de calcul programmable en fonction de la longueur du profilé devant être produit à la presse à filer, et celle-ci est transformée en un signal électrique permettant de déplacer le moyen de butée (4a) en position de service pour la longueur de coupe définie.

16. Procédé selon l'une quelconque des revendications 12 à 15, **caractérisé en ce que** la longueur de la pièce de billette restante est calculée, la surface de butée (4a) de la butée de profondeur (4) et un jeu situé entre deux billettes (2) disposées l'une derrière l'autre servent de points de mesure afin de calculer la longueur totale, et la longueur actuelle des pièces résiduelles peut se calculer par transmission de signaux à une unité de calcul et de commande à partir de la longueur totale de la billette (2) à scier et de la longueur de coupe calculée de la billette et, un signal de commande peut être déclenché en fonction de celle-ci afin d'éliminer la pièce résiduelle sous forme de déchet ou de la rapporter dans le four (1).
